# EUROPEAN PATENT SPECIFICATION

(11) **EP 2 192 754 B1**
(45) Date of publication and mention of the grant of the patent: **09.06.2021**
(21) Application number: 08020720.2
(22) Date of filing: 28.11.2008
(51) Int. Cl.: H04M 1/725, H04M 1/2745, G06F 3/048

(54) **Apparatus and method for organizing communication items**
Vorrichtung und Verfahren zur Organisation von Kommunikationselementen
Appareil et procédé d'organisation d'éléments de communication

(43) Date of publication of application: 02.06.2010
(73) Proprietor: Vodafone Holding GmbH, 40213 Düsseldorf (DE)
(72) Inventor: Nieuwerth, Marielke, 9514 BE Gasselternijveen (NL); Leon, German, 40219 Düsseldorf (DE); Mau, Jefferey, Chicago, IL 60605 (US)
(74) Representative: Jostarndt Patentanwalts-AG

(56) References cited:
- EP-A- 1 033 644
- EP-A- 1 855 451
- US-A1- 2001 006 388
- None

## Description

### Technical field

The present invention relates to a method for organizing communication items. In particular the present invention relates to a method according to claim 1 and a mobile communication device according to claim 7.

### Background of the invention

Today there is an increasing number of digital communication devices such as personal digital assistants (PDA), portable computers, mobile telephones, palmtop computers, etc.. Sometimes these devices are also equipped with cameras by taking pictures, as well as video and audio recordings. The features and capabilities of the devices lead to an increasing number of data files that maybe exchanged between different devices and users by wireless or wired networks. As an example, a mobile telephone is no longer limited for receiving and making voice calls but it may take photographs, receive e-mails and SMS messages and voice messages. The variety of different kinds of communication increases the number of communication items significantly. This number of communication items is increased even more because one and the same communication item of the above mentioned types is frequently copied to a plurality of recipients. Because of the sheer quantity it becomes consequently more and more difficult for individuals to organize their communication items on a communication device especially if the communication device has only a small screen.

It is known to set up different kinds of directories in which the communication items are listed in a sequential order according to different sorting criteria such as the name of the sender, receiving time, sent time, subject, and the like. However, conventional sorting mechanisms still do not solve the issue completely and the presentation of a large number of communication items remains difficult to organize in this way. In general, it is very helpful for a user if he can sort the communication items according to one or several of their characteristics.

Several attempts have been made to help the user to organize communication items in a more efficient way.

US 5898435 describes an image controlling device and a corresponding method. According to the known device a menu is constructed by arranging a plurality of menu items three dimensionally along a single cylinder. A portion of these menu items is displayed in such a manner that viewing is performed from the centre of the cylinder outwards. However, there remains a desire for the user for more support in organizing his communication items.

US 2001/0006388 A1 discloses a method for managing menu factions in a mobile station including the steps of executing menu edition, selecting menu items the user uses frequently, to set up a menu, executing the menu and displaying the menu of the selected menu items at first by a key panel separate from a display.

EP 1003644 A2 describes a two-way mobile communication device having a display screen for displaying an image map. The image map displays therein a plurality of graphical symbols which identify resident applications which can be launched. Keys or buttons outside the screen are used to activate (or launch) these resident applications. EP 1855451 A1 provides a portable communication terminal capable of displaying detailed information about a history of incoming calls of a plurality of categories by a single transition from a closed state to an open state on a main display portion. A user makes a setting, by way of an operation section, on histories of incoming calls of categories whose detailed information is desired to be display without specifying how the device is mechanically operated.

### Summary of the invention

The present invention proposes a method according to appended claim 1 and a mobile communication device according to appended claim 7 for providing a filter to organize graphical elements to be displayed on a screen of a mobile communication device. The graphical elements are associated with data items.

It is an advantage of the present invention that the user can design filters for communication items according to his needs. In this way navigating through the entirety of his communication items is considerably facilitated. The data items are preferably related to communication items and user generated content.

According to an embodiment of the present invention the method further comprises the step of displaying the filter attributes according to categories and subcategories of filter attributes.

In a convenient development the method further comprises the step of selecting the individual filter attributes by a drag and drop operation of graphical representations of the selected filter attribute from a first screen area to a second screen area. This is a intuitive way for the user to edit the properties of a filter.

In a convenient embodiment the method further comprises the step of automatically display on the screen scroll means enabling a user to scroll a list of items on the screen if the list is too long to be displayed entirely on the screen.

Advantageously, the method may comprise the step of canceling a selection of filter attributes.

In another advantageous embodiment the inventive method may further comprise the step of assigning an individual name to the new filter.

Further features and advantages will become apparent when reading the detailed description appended with drawings.

### Short description of the drawing

In the drawing exemplary embodiments of the invention are illustrated. It shows:
- Figure 1: a top view of the mobile communication device according to the invention;
- Figure 2: a schematic block diagram of the communication device of figure 1;
- Figure 3: a schematic screen view of the communication device with a filter applied;
- Figures 4a to 4d: screen views of the communication device when the user creates a new filter; and
- Figures 5a to 5d: screen views of the communication device when the user edits properties of an already existing filter.

Similar or identical features and elements are labeled with the same reference numbers in the drawing.

### Detailed description

Reference herein to "one embodiment" or "an embodiment" means that a particular feature, structure, or characteristic described in connection with the embodiment can be included in at least one implementation of the invention. The appearances of the phrase "in one embodiment" in various places in the specification are not necessarily all referring to the same embodiment, nor are separate or alternative embodiments necessarily mutually exclusive of other embodiments.

While the invention may be susceptible to various modifications and alternative forms, specific embodiments have been shown by way of example in the drawings and will be described in detail herein. However, it should be understood that the invention is not intended to be limited to the particular forms disclosed. Rather, the invention is to cover all modifications, and alternatives falling within the scope of the invention as defined by the following appended claims.

One or more specific embodiments of the present invention will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers' specific goals, such as compliance with system-related and businessrelated constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

Certain aspects commensurate in scope with the disclosed embodiments are set forth below. It should be understood that these aspects are presented merely to provide the reader with a brief summary of certain forms the invention might take and that these aspects are not intended to limit the scope of the invention. Indeed, the invention may encompass a variety of aspects that may not be set forth below.

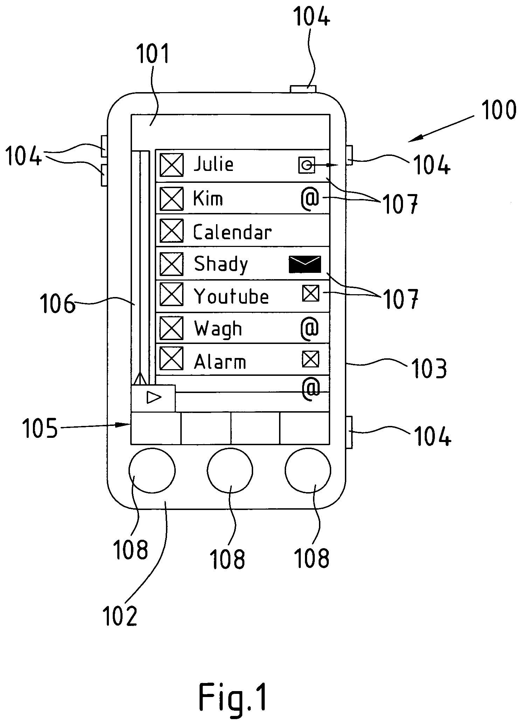

Figure 1 shows a mobile communication device 100 according to the present invention such as a mobile phone, a PDA (personal digital assistant) or the like, which is connected to a wireless public land mobile network (PLMN). The PLMN is a wireless telecommunication network according to GSM standard or according to the UMTS standard for example. The user of the communication device 100 can set up a connection to other communication devices through the network.

For the sake of the simplicity the present invention will be described in the following with reference to a PDA having a relatively large screen 101 covering a major part of the top surface 102 of the housing 103 of the mobile communication device. However, the present invention shall not be limited to PDAs.

On the periphery of the housing 103 there are buttons 104 provided enabling a user to control functionalities of the communication device 100. In addition to that, there are soft keys forming a command bar 105 and a scrollbar 106 available for the user for further control functionalities. In its main portion the screen 101 displays communication items 107 received by the communication device. Each communication item 107 displays a short name of the sender as well as an icon symbolizing the type of communication, e.g. e-mail, SMS etc. Finally, there are three hard keys 108 provided in the lower part of the top surface 102 of the housing 103.

The term "communication item" shall have a broad meaning in relation to the present invention. On the one hand it includes e-mail, voice, and SMS messages and the like but also contacts with other people and web sites of service providers. On the other hand also media files like pieces of music, video clips or pictures shall be comprised by the meaning of communication item. However, technically speaking a contact or a communication item is just a data item.

Each communication item has properties which can be used to search for a specific communication item or to group a plurality of communication items. The entirety of the communication items stored in the mobile communication device 100 is also referred to as "life drive" because it reflects all kinds of communication items of the user. For the purpose of organising the communication items in the life drive the user applies filters to the contents of the life drive. The filters are effective that only certain communication items having a predefined property are displayed on the screen 101, e.g. only telephone calls are displayed. The filters can be applied in different levels. On a first filter level only telephone calls are displayed. On the second level only telephone calls from a specific person or a specific group of persons are displayed. The invention allows for more than two levels if it is useful to provide for more levels.

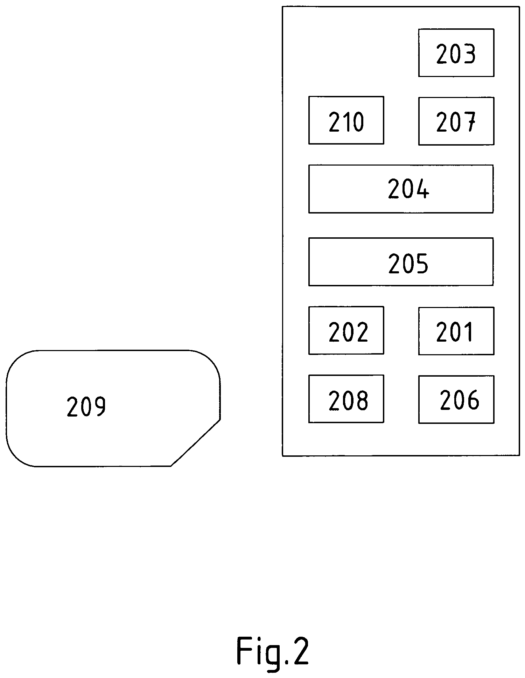

Figure 2 shows a schematic block diagram of the mobile communication device 100. The mobile communication device 100 comprises a mobile terminal 200 including a main processor 201 for controlling the operation of the mobile terminal 200. A memory 202 is coupled to the main processor 201 for storing data and applications that can be run on the main processor 201. Furthermore, the mobile terminal 200 comprises one or more communication interfaces. Particularly, the mobile terminal 200 provides a radio interface 203 for connecting the mobile terminal 200 wirelessly to a mobile communication network such as the PLMN mentioned above.

For capturing acoustic signals, particularly for capturing speech from the user of the mobile terminal 200, the mobile terminal 200 comprises a microphone 206. For outputting acoustic signals, the mobile terminal 200 comprises a loudspeaker 207. Moreover, the mobile terminal 200 comprises a liquid crystal display (LCD) 204 forming a screen. An input unit 205 interfaces the buttons 104, the command bar 105 and the hard keys 108.

By means of a card reader unit 208, the mobile terminal 200 can be connected to a subscriber identity module (SIM card) 209 to form the mobile communication device 100. The subscriber identity module 209 is a so-called smart card, which can be inserted into a card receptacle of the mobile terminal 200 that holds the card in a position, in which its contact elements are connected to corresponding contact elements of the card reader unit 208 of the mobile terminal 200. The card receptacle and the card reader unit 208 are usually arranged within a battery compartment of the mobile terminal 200, which is accessible by the mobile user.

The subscriber identity module 209 may be configured as a subscriber identity module (SIM) according to the GSM standard or as a universal subscriber identity module (USIM) according to the UMTS standard, for example. Finally, the mobile terminal 200 is equipped with a GPS module 210 allowing to determine the geographical location of the mobile terminal 200. In the memory 202 maps are stored such that the communication device 100 can indicate the present location of the device of the screen 101.

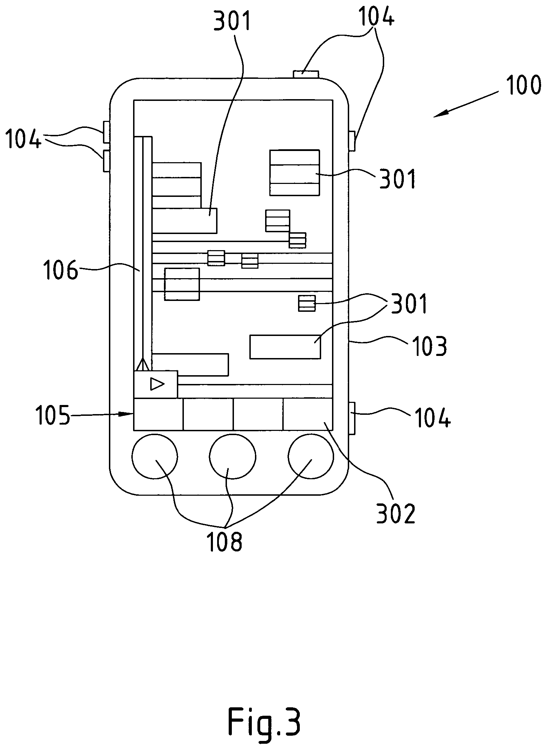

Figure 3 shows a top view of the mobile communication device 100. Incoming communication items are displayed on the screen 101 as icons 301 which are a symbolised in a simplified manner in figure 3. The icons 301 vary in shape and size as a function of the type of communication item to facilitate for the user to distinguish different types of communication items. The icons 301 are presented in a quasithree-dimensional viewing mode in which the icons 301 associated with more recently received communication items are replaced in the foreground of the screen 101 corresponding to the lower part of the screen 101. The icons 301 associated with older communication items are placed such that they seem to be further away in the background of the presentation shown in figure 3. By scrolling up and down the scrollbar 106 the user may travel along a timeline, i.e. the user may bring past communication items to the foreground of the screen 101. This functionality helps him already a lot to navigate through the communication items. However, if very many communication items are stored in the life drive of the mobile communication device 100 then even a relatively comfortable navigation along a timeline is not completely satisfactory. Consequently, the mobile communication device 100 provides for a filter button 302 in the command bar 105 enabling the user to filter all stored communication items according to specific characteristics and the thus reducing the number of communication items presented on the screen 101 when he is looking for a specific one.

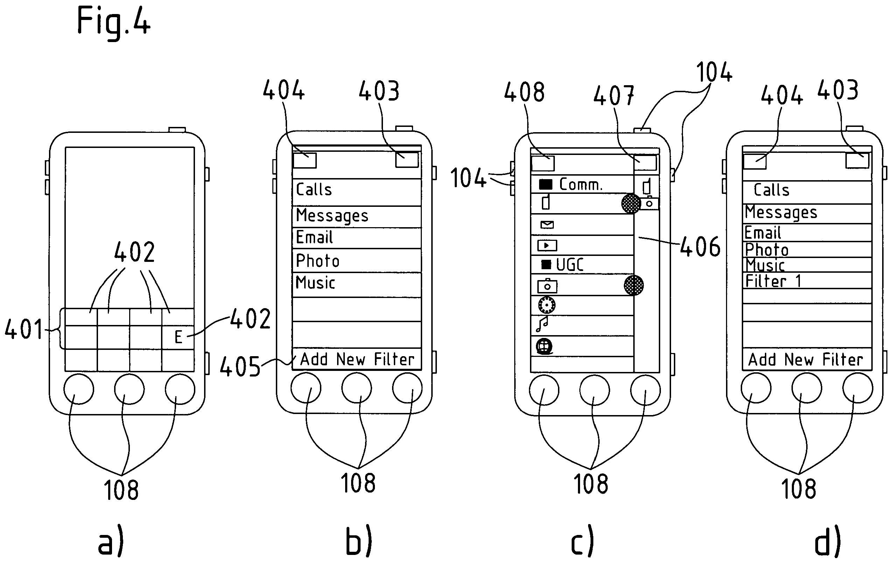

The screen 101 displays the communication according to a currently selected filter. If the user has selected previously to consider only telephone calls then the screen 101 displays only telephone calls but no emails, SMS messages etc. Obviously, the user may want to change the currently selected filter to rearange and to sort or to display other communication items on the screen 101. In order to switch from the currently selected filter to another available filter the user activates filter icon 302 in the control bar 105 on the bottom of the display 101. In response to the user interaction of the mobile communication device present a quick menu 401 on top of the command bar at 105 as it is shown in figure 4a.

The activation of the filter button 302 calls up a quick menu 401 shown in figure 4a. The quick menu of 401 contains eight soft keys 402. In the present embodiment five soft keys 402 are associated with the defined filter functions. The defined filter functions selectively bring up calls, messages, e-mails, photos, and music. In figure 4a in the quick menu 401 the currently selected filter is highlighted for the user (not shown in the drawing). Two of the soft keys 402 are still unused.

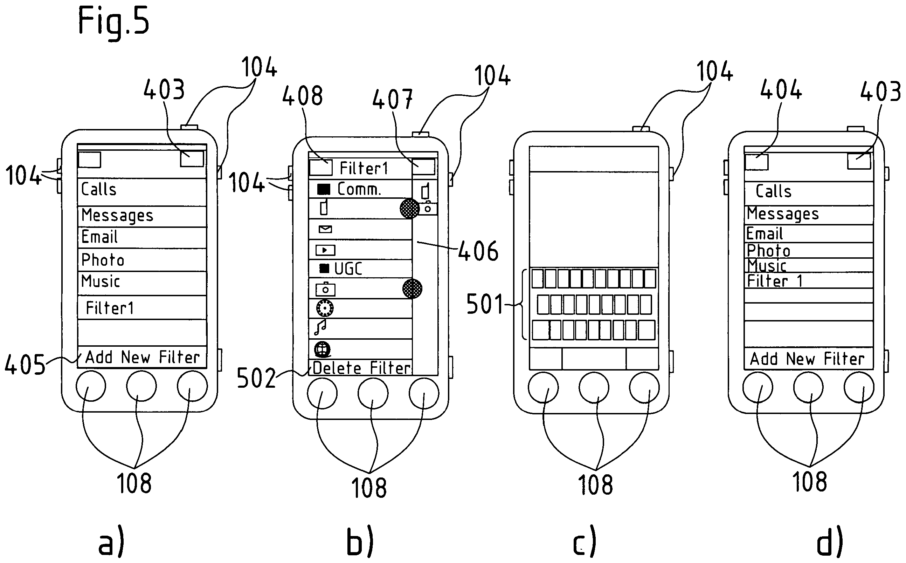

In this state the rest of the screen and the icons outside the quick menu 401 are disabled. In an embodiment of the present invention the disabled part of the screen turns black. This is a clear visual indication for the user that other functionalities than those linked with the command bar 105 or the quick menu 401 are disabled. The quick menu 401 contains an edit button 402 labelled with "E" in figure 4a. If the user taps on the edit button the screen displays a list of filter attributes as it is shown in Figure 4b. Figure 3 shows a screen view of the edit filter view which allows the user to edit any filter in life drive. On the main part of the display there is a list of filtering attributes. An edit button 403 enables a user to edit a filter already shown on the list of figure 4b. The edit mode initiated by edit button 403 will be described in connection with figures 5a to 5d. By activating a return button 404 the user may return from the screen shown in figure 4b to the screen shown in figure 4a.

Below the filter attribute list there is a button which is labeled "add new filter" 405. The activation of this button 405 by the user initiates the communication device to display a new screen which is called "create filter screen" and which is shown in figure 4c. The filter attributes are properties of the communication items allowing the user to distinguish different kinds of communication items. The filter attributes are organized on two different levels. In the situation shown in figure 4c the first level of filter attributes shown are "communication" and "user generated content". In the name filter category of "communication" there are subcategories on the second level such as calls, messages and voice mails. In the same way as the first level filter attributes are ordered in alphabetical order also the subcategory of filter attributes are ordered in alphabetical order as well. In order to create a new filter or edit an existing filter the user selects individual filter attributes from the list of filter attributes by drag and drop of the filter attributes displayed in the list into a vertical column 406 on the right side of the screen. If a user has selected more filter attributes than can be shown on the screen then a scroll bar appears on the display 101 allowing the user to scroll up and down the list. If the user is satisfied with a selection of filter attributes then he may actuate a save button 407, which is located in figure 4c in the upper right corner of the screen. In response to the user interaction, the filter previously created by the user is saved.

Opposite to the save button 407 there is a cancel button 408. Upon actuation the cancel button 408 undoes all selections of filter attributes. The screen of the mobile communication device returns to the situation shown in Figure 4a thus presenting the command bar 105 and the quick menu 401 to the user.

After the newly created filter has been saved, it is added to the list of filters as it is shown in figure 4d with a preliminary filter name "filter 1". If the user wants to create another new filter he taps on the button "add new filter" again and repeats the sequence described in connection with figure 4b to 4d. The additional new filter would be displayed on the list of filters in the same way with the preliminary name filter 2. Obviously, it is not convenient if filters are simply enumerated because it is very difficult for the user to remember the meaning of filters if they are simply named filter 1, filter 2, etc. Consequently the present invention provides the possibility to edit filter names by the user. The way how the user proceeds to edit the filter name is shown in figures 5a to 5d.

The user taps on the list of the available filters on the name of the filter which is labeled with a name "Filter 1" as it is shown in Figure 5a. In response to that, the communication device displays the chosen filter in the edit mode (Figure 5b). If the user now taps on to the filter label which is displayed on the top of the screen the filter name is displayed in edit mode as it is shown in figure 5c. On the lower part of the screen a keyboard 501 is displayed allowing the user to type in a new name for the filter. If the new name of the filter is completed it is stored by the user by tapping on the save button 405 on the right upper corner in the screen 101. In reaction to that the filter is integrated into the list of filters with its new name. In the present embodiment the filter name "Filter 1" is replaced by "My Calls and Photos" (Figure 5d.)

Going back to figure 5b the edit mode of the filter screen enables the user also to delete a filter from the list of filters. On the bottom of the screen a delete filter button 502 is displayed. If the user taps onto this button the previously selected filter is deleted. As a precaution to avoid unintentional deletion of filters by the user the communication device requires a confirmation that the selected filter shall be deleted from the user before the deletion is actually executed. If this confirmation is given by the user the filter is deleted. If the user does not confirm the deletion, the filter remains in the list of available filters. In both cases, the communication device returns into the filter menu mode in which all available filters are shown on the screen in a list (Figure 5a). If the user has confirmed the deletion of the selected filter, it is no longer shown on the list.

### List of reference numerals

- 100: communication device
- 101: screen
- 102: top surface
- 103: housing
- 104: buttons
- 105: command bar
- 106: scroll bar
- 107: communication items
- 108: hard key
- 200: mobile terminal
- 201: main processor
- 202: memory
- 203: radio interface
- 204: LCD display
- 205: input unit
- 206: microphone
- 207: loud speaker
- 208: card reader
- 209: SIM card
- 210: GPS module
- 301: icon
- 302: filter button
- 401: quick menu
- 402: "edit" button
- 403: "edit" button
- 404: return button
- 405: "add new filter" button
- 406: vertical column
- 407: save button
- 408: cancel button
- 501: keyboard
- 502: delete button

## Claims

1. Method for providing a filter to organize graphical elements (301) to be displayed on a screen (101) of a mobile communication device, wherein the graphical elements (301) are associated with data items, wherein the method comprises the following steps;
- displaying a list of filter attributes on the screen (101), wherein the filter attributes are properties of the data items;
- enabling a selection of individual filter attributes from the list to a user of the mobile communication device;
- saving by means of the mobile communication device filter attributes selected by the user as a new filter wherein the method is **characterized by** the step of:
- displaying a filter button on the screen (101) of the mobile communication device enabling the user to filter all stored data items according to specific properties; wherein
- the activation of the filter button calls up a quick menu containing soft keys associated with defined filter functions, wherein the rest of the screen (101) and the icons outside the quick menu are disabled.

2. Method according to Claim 1, wherein the method further comprises the step of displaying the filter attributes according to categories and subcategories of filter attributes.

3. Method according to Claim 1, wherein the method further comprises the step of selecting the individual filter attributes by a drag and drop operation of graphical representations of the selected filter attribute from a first screen area to a second screen area (404).

4. Method according to Claim 1, wherein the method further comprises the step of automatically display on the screen scroll means enabling a user to scroll a list of items on the screen if the list is too long to be displayed entirely on the screen.

5. Method according to Claim 1, wherein the method further comprises the step of cancelling a selection of filter attributes.

6. Method according to claim 1, wherein the method further comprises the step of assigning an individual name to the new filter.

7. Mobile communication device comprising a screen (101) to display graphical elements (301) organized on the screen (101) by a provided filter, wherein the graphical elements (301) are associated with data items, wherein the mobile communication device is configured to display a list of filter attributes on the screen (101), wherein the mobile communication device is further configured to enable selection of individual filter attributes from the list to a user of the mobile communication device, and further configured to save the filter attributes selected by the user as a new filter, **characterized in that** the mobile communication device is further configured to display a filter button on the screen (101) of the mobile communication device enabling the user to filter all stored data items according to specific properties, wherein the activation of the filter button calls up a quick menu containing soft keys associated with defined filter functions, wherein the rest of the screen (101) and the icons outside the quick menu are disabled.

## Patentansprüche

1. Verfahren zum Bereitstellen eines Filters, um grafische Elemente (301) zu organisieren, die auf einem Bildschirm (101) einer Mobilkommunikationsvorrichtung angezeigt werden sollen, wobei die grafischen Elemente (301) mit Datenelementen verknüpft sind, wobei das Verfahren die folgenden Schritte umfasst:
- Anzeigen einer Liste von Filterattributen auf dem Bildschirm (101), wobei die Filterattribute Eigenschaften der Datenelemente sind;
- Ermöglichen einer Auswahl einzelner Filterattribute aus der Liste für einen Benutzer der Mobilkommunikationsvorrichtung;
- Sichern von durch den Benutzer ausgewählten Filterattributen als ein neues Filter mittels der Mobilkommunikationsvorrichtung, wobei das Verfahren durch den folgenden Schritt gekennzeichnet ist:
- Anzeigen einer Filterschaltfläche, die ermöglicht, dass der Benutzer alle gespeicherten Datenelemente gemäß spezifischen Eigenschaften filtert, auf dem Bildschirm (101) der Mobilkommunikationsvorrichtung; wobei
- die Aktivierung der Filterschaltfläche ein Schnellmenü aufruft, das Softkeys enthält, die mit definierten Filterfunktionen verknüpft sind, wobei der Rest des Bildschirms (101) und die Icons außerhalb des Schnellmenüs deaktiviert werden.

2. Verfahren nach Anspruch 1, wobei das Verfahren ferner den Schritt des Anzeigens der Filterattribute gemäß Kategorien und Unterkategorien der Filterattribute umfasst.

3. Verfahren nach Anspruch 1, wobei das Verfahren ferner den Schritt des Auswählens der einzelnen Filterattribute durch eine Operation des Ziehens und Ablegens grafischer Darstellungen des ausgewählten Filterattributs von einem ersten Bildschirmbereich zu einem zweiten Bildschirmbereich (404) umfasst.

4. Verfahren nach Anspruch 1, wobei das Verfahren ferner den Schritt der automatischen Anzeige eines Scroll-Mittels, das ermöglicht, dass ein Benutzer eine Liste von Elementen auf dem Bildschirm scrollt, auf dem Bildschirm, falls die Liste zu lang ist, um vollständig auf dem Bildschirm angezeigt zu werden, umfasst.

5. Verfahren nach Anspruch 1, wobei das Verfahren ferner den Schritt des Aufhebens einer Auswahl von Filterattributen umfasst.

6. Verfahren nach Anspruch 1, wobei das Verfahren ferner den Schritt des Zuweisens eines eigenen Namens zu dem neuen Filter umfasst.

7. Mobilkommunikationsvorrichtung, die einen Bildschirm (101) zum Anzeigen graphischer Elemente (301), die auf dem Bildschirm (101) durch ein bereitgestelltes Filter organisiert sind, umfasst, wobei die grafischen Elemente (301) mit Datenelementen verknüpft sind, wobei die Mobilkommunikationsvorrichtung dafür konfiguriert ist, auf dem Bildschirm (101) eine Liste von Filterattributen anzuzeigen, wobei die Mobilkommunikationsvorrichtung ferner dafür konfiguriert ist, für einen Benutzer der Mobilkommunikationsvorrichtung eine Auswahl einzelner Filterattribute aus der Liste zu ermöglichen, und wobei sie ferner dafür konfiguriert ist, die durch den Benutzer ausgewählten Filterattribute als ein neues Filter zu sichern, **dadurch gekennzeichnet, dass** die Mobilkommunikationsvorrichtung ferner dafür konfiguriert ist, auf dem Bildschirm (101) der Mobilkommunikationsvorrichtung eine Filterschaltfläche anzuzeigen, die ermöglicht, dass der Benutzer alle gespeicherten Datenelemente gemäß spezifischen Eigenschaften filtert, wobei die Aktivierung der Filterschaltfläche ein Schnellmenü aufruft, das Softkeys enthält, die mit definierten Filterfunktionen verknüpft sind, wobei der Rest des Bildschirms (101) und die Icons außerhalb des Schnellmenüs deaktiviert werden.

## Revendications

1. Procédé consistant à fournir un filtre pour organiser des éléments graphiques (301) à afficher sur un écran (101) d'un dispositif de communication mobile, les éléments graphiques (301) étant associés à des éléments de données, le procédé comprenant les étapes suivantes;
- l'affichage d'une liste d'attributs de filtre sur l'écran (101), les attributs de filtre étant des propriétés des éléments de données;
- permettre à un utilisateur du dispositif de communication mobile de sélectionner des attributs de filtre spécifiques à partir de la liste;
- l'enregistrement des attributs de filtre sélectionnés par l'utilisateur comme nouveau filtre au moyen du dispositif de communication mobile, le procédé étant **caractérisé par** les étapes suivantes :
- l'affichage d'un bouton de filtre sur l'écran (101) du dispositif de communication mobile, permettant à l'utilisateur de filtrer tous les éléments de données stockés en fonction de propriétés spécifiques;
- l'activation du bouton de filtre appelant un menu rapide contenant des touches associées à des fonctions de filtre définies, le reste de l'écran (101) et les icônes en dehors du menu rapide étant désactivées.

2. Procédé conformément à la revendication 1, le procédé comprenant en outre l'étape suivante : l'affichage des attributs de filtre en fonction des catégories et sous-catégories des attributs de filtre.

3. Procédé conformément à la revendication 1, le procédé comprenant en outre l'étape suivante : la sélection des attributs de filtre spécifiques par une opération glisser-déposer de représentations graphiques de l'attribut de filtre sélectionné d'une première zone de l'écran vers une deuxième zone de l'écran (404).

4. Procédé conformément à la revendication 1, le procédé comprenant en outre l'étape suivante : l'affichage automatique du moyen de défilement, permettant à un utilisateur de dérouler une liste d'éléments sur l'écran si la liste est trop longue pour être affichée entièrement sur l'écran.

5. Procédé conformément à la revendication 1, le procédé comprenant en outre l'étape suivante : l'annulation d'une sélection d'attributs de filtre.

6. Procédé conformément à la revendication 1, le procédé comprenant en outre l'étape suivante : l'attribution d'un nom spécifique au nouveau filtre.

7. Dispositif de communication mobile, comprenant un écran (101) destiné à afficher des éléments graphiques (301) organisés sur l'écran (101) par un filtre fourni, les éléments graphiques (301) étant associés à des éléments de données, le dispositif de communication mobile étant configuré pour afficher une liste d'attributs de filtre sur l'écran (101), le dispositif de communication mobile étant en outre configuré pour permettre à un utilisateur du dispositif de communication mobile de sélectionner des attributs de filtre spécifiques à partir de la liste,
et en outre
configuré pour sauvegarder les attributs de filtre sélectionnés par l'utilisateur comme nouveau filtre, **caractérisé en ce que** le dispositif de communication mobile est en outre configuré pour afficher un bouton de filtre sur l'écran (101) du dispositif de communication mobile, permettant à l'utilisateur de filtrer tous les éléments de données stockés en fonction de propriétés spécifiques, l'activation du bouton de filtre appelant un menu rapide contenant des touches associées à des fonctions de filtre définies, le reste de l'écran (101) et les icônes en dehors du menu rapide étant désactivées.
